# EUROPEAN PATENT SPECIFICATION

(11) **EP 4 473 055 B1**
(45) Date of publication and mention of the grant of the patent: **08.04.2026**
(21) Application number: 23702365.0
(22) Date of filing: 02.02.2023
(51) Int. Cl.: C08L 23/04, C08L 23/06, C08F 10/06

(54) **POLYOLEFIN BLEND CONTAINING RECYCLED ALUMINIUM**
POLYOLEFINMISCHUNG MIT RECYCELTEM ALUMINIUM
MÉLANGE DE POLYOLÉFINE CONTENANT DE L'ALUMINIUM RECYCLÉ

(30) Priority: 03.02.2022 EP 22155003
(43) Date of publication of application: 11.12.2024
(73) Proprietor: Ineos Europe AG, 1180 Rolle, Vaud (CH)
(72) Inventor: DENISSEN, Wim, 2610 Wilrijk (BE)
(74) Representative: Mathisen & Macara LLP
(86) International application number: PCT/EP2023/052542
(87) International publication number: WO 2023/148259

(56) References cited:
- US-A1- 2021 347 970
- GEORGIOPOULOU IOULIA ET AL: "Recycling of post-consumer multilayer Tetra Pak packaging with the Selective Dissolution-Precipitation process", RESOURCES, CONSERVATION AND RECYCLING, ELSEVIER, AMSTERDAM, NL, vol. 165, 19 November 2020 (2020-11-19), XP086389561, ISSN: 0921-3449, [retrieved on 20201119], DOI: 10.1016/J.RESCONREC.2020.105268

## Description

The present invention relates to a polymer composition including as one component a recycled polyethylene containing aluminium, and more particularly a blend of "PolyAl", a virgin polypropylene and a copolymer of polypropylene and polyethylene as well as articles made therefrom.

In recent years, concern about plastics and the environmental sustainability of their use in current quantities has led to new legislation on disposal, collection and recycling of polyolefins. There have, in addition, been efforts in a number of countries to increase the percentage of plastic materials, which are recycled instead of being sent to landfill.

US 2021347970, for example, describes a polyolefin composition, which comprises a high quantity, such as greater than or equal to 30 wt-%, of a recycled relatively polyethylene rich material.

A particular form of packaging which is known to be difficult to recycle is the aseptic beverage carton, an example of which is that sold under the trade name Tetra Pak^{®}. Aseptic beverage cartons are multilayer polymer-coated paperboards including a layer of aluminium foil. Typical cartons contain approximately 75% cardboard, 20% plastic and 5% aluminium. Separation and recycling of cardboard fibres recovered from the cartons has been commonplace for many years, and there is a market for its processing into industrial and consumer products. However the remaining mixture of plastic and aluminium, known as "PolyAl", cannot economically be separated any further. It is also much harder to recycle, mainly due to the lack of commercial applications for this material.

PolyAl typically comprises polyethylene, such as at least 85wt% low density polyethylene (LDPE), 0.5 to 18wt%, such as 2-15wt%, aluminium and other components, such as 0-2wt% cellulose. Most commonly the amount of aluminium is in the range 2-5wt%.

It is reported in "Recycling of Aseptic Beverage Cartons: A Review", Recycling 2021, 6, 20 (https://doi.org/10.3390/recycling6010020) that PolyAl has been found to have higher thermooxidative stability, higher crystallinity, lower impact resistance, and higher tensile strength than the corresponding pure olefin polymers. It also reports that it is known to process the PolyAl, sometimes containing additional virgin LDPE, into a granulate and use it to make injection moulded products such as hangers, pens, crates, benches, flower pots etc.

An example of the commercial use of PolyAl is the EcoAllene^{®} products sold by Ecoplasteam SpA. These include blends of PolyAl with polypropylene or high density polyethylene (HDPE). The EcoAllene^{®} product BA35P05H comprises PolyAl plus 35wt% polypropylene and 5wt% HDPE, as well as 5wt% of additives. It has a density of 988 kg/m³ and a melt index MI₂ of 7.74 g/10min, an Izod impact resistance (ISO180) of 14 kJ/m² and a flexural modulus (ISO178) of 905 MPa. The EcoAllene^{®} products are stated to be suitable for a variety of moulded products in many applications.

Despite the above, there remains a need to develop further blends containing PolyAl in order to increase its use. Accordingly in a first aspect the present invention provides a composition comprising
A) 10-50wt% of a polyethylene having an MI₂ of 0.2-10 g/10min and containing 0.5-18wt% aluminium;
B) 25-50wt% of a polypropylene homopolymer having an MFR of 3 - 45 g/10min and a xylene cold soluble (XCS) content of no more than 3wt%;
C) 10-30wt% of a heterophasic propylene copolymer containing 3 - 20wt% of ethylene and/or another C₄-C₈ α-olefin and having an MFR of 2 - 50 g/10min;
D) 0-10wt% of other additives, amounts being based on the total weight of the composition,
wherein the composition has an MFR of from 3 to 15 g/10min.

The composition of the invention has a good balance of stiffness, impact resistance and processability, making it suitable for injection moulding applications, particularly for thick-walled articles such as boxes, crates, pallets, bins and dustbins.

Usually both components (b) and (c) are virgin polymers. The term "virgin" denotes newly produced polymers prior to first use which have not been recycled. In case that the origin of the polymer for component (b) or (c) is not explicitly mentioned, the polymer is a "virgin" polymer.

### Component A

Component A is a recycled polyethylene. Component A may, subject to the requirements on MI₂ and aluminium content, be any suitable "PolyAl" polyethylene material.

The polyethylene is usually a low density polyethylene (LDPE). (LDPE typically has a density of 900-940 kg/m³, for example 910-930 kg/m³. Due to the presence of aluminium, the density of component A is generally higher than the base polyethylene.)

Component A preferably has an aluminium content of at least 1 wt%, more preferably at least 2 wt%. Typical ranges are 2 - 12wt%, or 2 - 8 wt% or alternatively 2 - 4wt%.

Component A preferably has a melt flow rate MI₂ of 0.5 - 8 g/10 min and more preferably 0.8 - 6 g/10min. (MI₂ as used herein is determined according to ISO1133 at a temperature of 190°C under a load of 2.16 kg.)

Component A preferably has a flexural modulus of 180 - 600 MPa, preferably 250 - 600 MPa, most preferably of 300 - 600 MPa.

Component A preferably has a notched Izod impact resistance at 23°C of greater than 9 kJ/m², preferably greater than 11 kJ/m² and most preferably greater than greater than 13 kJ/m². Typically, component A may have a notched Izod impact resistance measured according to ISO180 at 23°C of up to 20 kJ/m². Component A preferably has a tensile stress at yield of greater than 6 MPa, preferably greater than 8 MPa and most preferably greater than greater than 10 MPa. Typically, component A may have a tensile stress at yield of less than 15 MPa.

Component A preferably has a tensile strain at yield of greater than 8%, preferably greater than 35% and most preferably greater than greater than 14%. The tensile strain at yield is preferably no more than 110%, preferably no more than 80% and more preferably no more than 60%.

### Component B

Component B is a propylene homopolymer. By "homopolymer" is meant a polypropylene that comprises at least 97wt%, more preferably of at least 98wt%, still more preferably at least 99wt% of propylene units. In a preferred embodiment only propylene units are detectable in the propylene homopolymer.

The propylene homopolymer preferably has a pentad isotacticity as determined by ¹³C-NMR of more than 96 mol%. The pentad isotacticity is more preferably 96.5 mol% up to 99.9% and more preferably 96.7 mol% to 99.8%.

The propylene homopolymer preferably has a melt flow rate MFR of 4 - 35 g/10 min and more preferably 5 - 25 g/10min.

The propylene homopolymer has a xylene cold soluble content of no more than 3wt%, such as 0.1 to 3 wt%. The propylene homopolymer preferably has an XCS content of no more than 2.5wt% and more preferably no more than 2wt%.

Preferably, the propylene homopolymer has a flexural modulus (ISO178) of at least 1900 MPa, more preferably at least 2000 MPa. A flexural modulus of at least 2100 MPa is particularly preferred. Typically, the propylene homopolymer may have a flexural modulus (ISO178) of less than 3000 MPa, preferably less than 2800 MPa and most preferably less than 2500 MPa.

Propylene homopolymers are widely available commercially. They can be produced by polymerization in the presence of any conventional coordination catalyst system including Ziegler-Natta and single site catalysts such as metallocenes, and in any conventional polymerisation process such as gas phase, slurry and propylene bulk processes known in the art.

The propylene homopolymer may optionally be nucleated with at least one nucleating agent. Preferred nucleating agents are described below in the section discussing component D.

### Component C

Component C is a propylene copolymer. The propylene copolymer comprises units derived from propylene and ethylene and/or another C₄ to C₁₂ α-olefin, preferably 1-butene, 1-pentene, 1-hexene, 1-heptene, 1-octene, 1-nonene or 1-decene. Ethylene and/or 1-butene are preferred. Most preferably the copolymer is a propylene-ethylene copolymer.

The MFR of the propylene copolymer is preferably from 10 to 40 g/10min, more preferably from 10 to 30 g/10min.

The propylene copolymer preferably has an XCS content in the range 6 - 40 wt%, preferably 8 - 30 wt% and more preferably 10-20wt%.

The propylene copolymer preferably has a flexural modulus of at least 1000 MPa, more preferably at least 1200 MPa and most preferably at least 1400 MPa. Typically, the propylene copolymer may have a flexural modulus of less than 2000 MPa, preferably less than 1900 MPa and most preferably less than 1800 MPa.

The propylene copolymer preferably has a notched Izod impact resistance (ISO180) measured at -20°C of at least 2 kJ/m² more preferably at least 3 kJ/m² and most preferably at least 4 kJ/m². Typically, the propylene copolymer may have a notched Izod impact resistance of up to 20 kJ/m², preferably up 15 kJ/m² and most preferably up 10 kJ/m².

The propylene copolymer is a heterophasic composition, which means that it comprises
a matrix comprising a propylene homopolymer, and
an elastomeric polypropylene which is dispersed within the matrix and comprises comonomer units derived from ethylene and/or a C₄ to C₈ α-olefin.

In the present invention, the term "matrix" is to be interpreted in its commonly accepted meaning, i.e. it refers to a continuous phase (in the present invention a continuous polymer phase) in which isolated or discrete particles such as rubber particles may be dispersed.

By "homopolymer" is meant a polypropylene that comprises at least 97wt%, more preferably of at least 98wt%, still more preferably of at least 99wt% of propylene units. In a preferred embodiment only propylene units are detectable in the propylene homopolymer.

The amount of matrix homopolymer is preferably 65 - 94wt%, more preferably 75 - 92wt% and most preferably 85-90wt%. The amount of elastomeric copolymer is preferably 6 -35wt%, more preferably 8 - 25wt% and most preferably 10 - 15wt%.

The matrix homopolymer preferably has an pentad isotacticity of at least 93mol%, preferably at least 96mol%. The pentad isotacticity is most preferably 96.5 mol% up to 99.8mol%.

The elastomeric copolymer preferably contains 30 - 60wt% of ethylene and/or a C₄ to C₈ α-olefin, more preferably 40 - 60wt% and most preferably 50 - 60wt%. In case the elastomeric polypropylene comprises comonomer units derived from a C₄ to C₈ α-olefin, these are preferably selected from 1-butene, 1-hexene, 1-octene, or any mixture thereof. The elastomeric copolymer preferably contains ethylene, and more preferably it comprises units of propylene and ethylene only.

The ratio of the intrinsic viscosity of the xylene soluble fraction to the xylene insoluble fraction is preferably between 1.0 and 2.0, and more preferably between 1.2 and 1.8.

Heterophasic propylene copolymers are widely available commercially. They can be produced by polymerization in the presence of any conventional coordination catalyst system including Ziegler-Natta and single site catalysts such as metallocenes, and in any conventional polymerisation process such as gas phase, slurry and propylene bulk processes known in the art.

One can, for example, mix the matrix homopolymer and the elastomeric copolymer and possible additives together according to any known process, such as a melt mixture of the two preformed polymers. However, processes during which the respective polymers are prepared in successive stages of polymerization are preferred. Generally, the matrix homopolymer is first prepared, and then the elastomeric copolymer is prepared in the presence of the homopolymer from the first stage. These stages can each be performed independently of each other, in a suspension, in an inert hydrocarbon diluent, in propylene maintained in the liquid state or even in the gaseous state, on an agitated bed or, preferably, on a fluid bed.

A preferred polymerisation process is a gas phase process comprising two reactors in series, in which the homopolymer is made in the first reactor and the elastomeric copolymer in the second reactor. Polymerization of propylene is conducted in the first reactor. Hydrogen is used to obtain the desired MFR value. The catalyst system components are added at a rate to obtain the desired rate of polymerization.

Gas-phase or vapour-phase olefin polymerisation processes are disclosed generally in "Polypropylene Handbook" pp. 293-298, Hanser Publications, NY (1996), and more fully described in "Simplified Gas-Phase Polypropylene Process Technology" presented in Petrochemical Review, March, 1993.

A gas-phase reactor system may function as a plug-flow reactor in which a product is not subject to backmixing as it passes through the reactor, such that conditions at one part of the reactor may be different from conditions at another part of the reactor. An example of a substantially plug-flow system is a horizontal, stirred, subfluidized bed system such as described in US 3957448; US 3965083; US 3971768; US 3970611; US 4129701; US 4101289; US 4130699; US 4287327; US 4535134; US 4640963; US 4921919, US 6069212, US 6350054; and US 6590131. It is preferred that the reactor system used to make the compositions of the present invention functions as a plug-flow reactor.

The term "plug-flow reactor" refers to reactors for conducting a continuous fluid flow process without forced mixing at a flow rate such that mixing occurs substantially only transverse to the flow stream. Agitation of the process stream may be desirable, particularly where particulate components are present; if done, agitation will be carried out in a manner such that there is substantially no back-mixing. Perfect plug flow cannot be achieved because the diffusion will always lead to some mixing, the process flow regime being turbulent, not laminar. Since perfect plug flow conditions are not achieved in practice, a plug flow reactor system sometimes is described as operating under substantially plug flow conditions. Depending on manufacturing process conditions, various physical properties of olefin polymers may be controlled. Typical conditions which may be varied include temperature, pressure, residence time, catalyst component concentrations, molecular weight control modifier (such as hydrogen) concentrations, and the like.

The polymer powder containing active catalyst residues is intermittently transferred to a depressurization vessel to remove unreacted monomer and other gaseous components. The depressurization vessel is pressurized with nitrogen to convey the polymer powder into the second reactor for further polymerization. Further propylene, comonomer and hydrogen are added in a ratio to obtain the desired composition. The polymer powder is intermittently removed from the second reactor for subsequent removal of all volatile materials followed by compounding to obtain the target composition in the form of pellets.

The propylene copolymer may optionally be nucleated with at least one nucleating agent. Preferred nucleating agents are described below in the section discussing component D.

### Component D

Component D can be any of the well known types of additive which are typically added to polyolefin compositions. The additives may include nucleating agents, antioxidants, antiblocking agents, slip agents, UV stabilisers, anti-acids, pigments or compatibilisers or fillers such as talc.

The nucleating agent is preferably an inorganic nucleating agent, an organic nucleating agent or a polymeric nucleating agent. Organic nucleating agents are preferred, in particular α-nucleating agents. Generally any α-nucleating agent can be used and is usually added to reach a content of 0.01wt% - 0.5 wt%, preferably 0.1 - 0.25 of the polymer composition. Examples of suitable α-nucleating agents include
(i) salts of monocarboxylic acids and polycarboxylic acids, e.g. sodium benzoate or aluminum tert-butylbenzoate,
(ii) dibenzylidenesorbitol (e.g. 1,3 : 2,4 dibenzylidenesorbitol) and C18-C-alkyl-substituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), nonitol,1,2,3,-trideoxy-4,6:5,7-bis-O-[(4-propylphenyl)methylene]-nonitol,
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymers.

Examples of antioxidants which may be used, for example to reach a content of 0.01 - 0.2 wt%, preferably 0.02 - 0.15 wt% of the polymer composition, are sterically hindered phenols (such as CAS No. 6683-19-8, also sold as Irganox 1010 FF^{™} by BASF), phosphorous based antioxidants (such as CAS No. 31570-04-4, also sold as Hostanox PAR 24 (FF)^{™} by Clariant, or Irgafos 168 (FF)TM by BASF), sulphur based antioxidants (such as CAS No. 693- 36-7, sold as Irganox PS-802 FL^{™} by BASF), nitrogen-based antioxidants (such as 4,4'- bis(α,α-dimethylbenzyl)diphenylamine), or antioxidant blends.

Examples for anti-acids which may be used, for example to reach a content of 0.01 - 0.15 wt%, preferably 0.02 - 0.1 wt%, in the polymer composition according to the present invention are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1).

Antiblocking agents that may be used, for example to reach a content of 0.01 - 0.3 wt%, preferably 0.02 - 0.2 wt%, in the polymer composition according to the present invention are natural silica such as diatomaceous earth (such as CAS No. 60676-86-0 (SuperFloss^{™}), CAS-No. 60676-86-0 (SuperFloss E^{™}), or CAS-No. 60676-86-0 (Celite 499^{™})), synthetic silica (such as CAS-No. 7631-86-9, CAS-No. 7631-86-9, CAS-No. 7631-86-9, CAS-No. 7631-86-9, CAS-No. 7631-86-9, CAS- No. 7631-86-9, CAS-No. 112926-00-8, CAS-No. 7631-86-9, or CAS-No. 7631-86- 9), silicates (such as aluminum silicate (Kaolin) CAS-no. 1318-74-7, sodium aluminum silicate CAS-No. 1344-00-9, calcined kaolin CAS-No. 92704-41-1, aluminum silicate CAS-No. 1327-36-2, or calcium silicate CAS-No. 1344-95-2), synthetic zeolites (such as sodium calcium aluminosilicate hydrate CAS-No. 1344- 01-0, CAS-No. 1344-01-0, or sodium calcium aluminosilicate, hydrate CAS-No. 1344-01-0). UV-stabilizers which might be used in the polymer compositions according to the present invention are, for example, Bis-(2,2,6,6-tetramethyl-4-piperidyl)-sebacate (CAS -No. 52829-07-9, Tinuvin 770); 2-hydroxy-4-(octyloxy)benzophenone (CAS- No. 1843-05-6, Chimassorb 81).

Suitable antistatic agents, and which may for example be added to reach a content of 0.01 - 0.4 wt%, preferably 0.05 - 0.3 wt% of the polymer composition, are, for example, glycerol esters (CAS No. 97593-29-8) or ethoxylated amines (CAS No. 71786-60-2 or 61791-31-9) or ethoxylated amides (CAS No. 204-393-1).

### The composition

The composition of the present invention can be obtained by any appropriate technique. It is preferably obtained by physically blending the three polymer components (A)-(C) and any desired additive component or components (D). One can, for example, mix the polymers and any desired additives (D) together according to any known process, such as a melt mixture of the preformed polymers.

Particularly preferred compositions may comprise one or more of:
35 to 50wt% of component A;
25 to 40wt% of component B;
20 to 30wt% of component C; and
0 to 5 wt% of component D.

In a further aspect of the invention comprises a process for making the polymer composition of the first aspect, comprising blending together
a) 10-50wt% of a polyethylene having an MI₂ of 0.2-10 g/10min containing 0.5-18wt% aluminium;
b) 25-50wt% of a polypropylene homopolymer having an MFR of 3 - 45 g/10min and a xylene cold soluble (XCS) content of no more than 3wt%;
c) 10-30wt% of a heterophasic propylene copolymer containing 3 - 20wt% of ethylene and/or another C₄-C₈ α-olefin and having an MFR of 2 - 50 g/10min;
d) 0-10wt% of other additives, amounts being based on the total weight of the composition.

The components (a)-(d), including their preferred amounts, in this aspect are preferably as described for (A)-(D) in the composition of the first aspect of the present invention.

The composition of the invention is particularly suited for making into large injection moulded articles, and a further aspect of the invention is an article, preferably a moulded article and more preferably an injection moulded article, comprising the composition of the invention as described above.

### EXAMPLES

In the present Examples the various parameters were determined as described below. For avoidance of doubt, all such parameters as described in the description and claims should be measured using the same techniques.

Melt flow rate of polypropylene (MFR) and melt index of polyethylene (MI₂)₂) under a load of 2.16 kg, and are indicated in g/10min.

Density of the polyethylene was measured according to ISO 1183-1 (Method A) and the sample plaque was prepared according to ASTM D4703 (Condition C) where it was cooled under pressure at a cooling rate of 15°C/min from 190°C to 40°C.

Xylene cold soluble and insoluble fractions (XCS and XCI respectively) were determined at 25°C according to ISO 16152 by putting 3g of polymer in a solution in 200ml of metaxylene at boiling temperature, cooling the solution to 25°C by immersion in a water bath and maintaining the solution at that temperature for 1 hour, and filtering the soluble fraction at 25°C on filter paper. The filter residue constitutes the xylene insoluble fraction XCI while the residue of the filtrate following the complete evaporation of the solvent constitutes the xylene soluble fraction (XCS).

Intrinsic viscosity of the XCS and XCI fractions was determined in tetralin at 140°C using an Ostwald viscometer.

The microstructure and ethylene content of propylene polymers was determined by quantitative nuclear-magnetic resonance (NMR) spectroscopy. Specifically, ¹³C-NMR was used to quantify the isotacticity and regio-regularity of the propylene homopolymers and also to quantify the comonomer content and comonomer sequence distribution of the polymers. The technique is described in detail in WO 2017005837, pages 22-25.

Metal content was determined by x-ray fluorescence (XRF).

Flexural modulus was measured at 23°C on an injected specimen having a thickness of 4mm according to ISO178.

Tensile Modulus was measured according to ISO 527-2 (cross head speed = 1 mm/min; 23°C) using injection molded specimens as described in ISO 1873-2 (dog bone shape, 4 mm thickness).

Tensile strain at break and tensile stress at break were measured according to ISO 527-2 (cross head speed = 50 mm/min; 23°C) using injection molded specimens as described in ISO 1873-2 (dog bone shape, 4 mm thickness).

Notched Izod impact resistance was measured according to ISO180/1A. The specimens were prepared according to ISO1873-2.

### Component A

Components A1-A3 are PolyAl compositions which are commercially available from Palurec GmbH , Plastigram and Recon respectively. They have the following properties:

**TABLE 1**

| **Component** | | **A1** | **A2** | **A3** |
|---|---|---|---|---|
| MI₂ | g/10min | 5.5 | 2.8 | 2.3 |
| Aluminium content | wt% | 0.3 | 2.9 | >10 |
| Tensile stress at yield | MPa | 10.9 | 11.4 | 12.7 |
| Tensile strain at yield | % | 73 | 52 | 11.6 |
| Tensile mod (0.05-0.25) | MPa | 245 | - | 572 |
| Flexural modulus | MPa | 262 | 355 | 575 |
| Izod, notched, 23°C | kJ/m² | 48.1 | 21.0 | 9.0 |

It can be seen from the data above that increasing aluminium content in a PolyAl composition results in increased stiffness, but lower impact resistance and also a smaller elongation at break.

### LDPE 1

LDPE 1 is a resin free-radical initiated, high pressure low density ethylene polymer commercially available from INEOS under the trade name 19N430, and having the properties shown in Table 2. One of its commercial applications is as a plastic layer in beverage cartons, which is also the source of the polyethylene in Component A. Thus its properties are very similar to those of the pure polyethylene present in the PolyAl compositions A, in particular Component A2.

**TABLE 2**

| Component | | LDPE 1 |
|---|---|---|
| Density | kg/m³ | 919 |
| MI₂ | g/10min | 7.6 |
| Tensile stress at yield | MPa | 10.5 |
| Tensile strain at yield | % | 88 |
| Tensile mod (0.05-0.25) | MPa | 163 |
| Flexural modulus | MPa | 152 |
| Izod, notched, 23°C | kJ/m² | 44.8 |

It can be seen from comparing the data in Tables 1 and 2 that the PolyAl composition A2 has significantly higher stiffness but poorer impact resistance and reduced elongation at break compared with the equivalent pure LDPE.

### Component B

The polymers used as Component B are propylene homopolymers and were prepared as described in US 4210738. The catalyst used was that described in Example 1 of US 4210738, and the process was similar to that described in Examples 41 and 42, except that in the present case the homopolymer was made in two reactors in series, with identical polymers being made in each reactor. The hydrogen to propylene ratio was adjusted to reach the desired MFR of the composition. The resulting polymer powder was pelletized in an extruder together with 800ppm Irgafos 168, 275ppm Irganox 1010, 400 ppm zinc stearate, 300 ppm Hyperform^{®} HPN-20E and 150 ppm DHBP for Component B1, and with 3000 ppm glycerol monostearate, 1000 ppm Irganox 1010, 1000 ppm sodium benzoate, 800 ppm AK Stab PEP36, 500 ppm DHT-4A.PE/PP, 150 ppm DHBP, 4 ppm Uvitex OB for Component B2. The polymers had the following additional properties:

**TABLE 3**

| Component | | B1 | B2 |
|---|---|---|---|
| MFR | g/10min | 20 | 7 |
| XCS | wt% | 1.8 | 1.1 |
| Flexural modulus | MPa | 2200 | 2200 |

### Component C

The polymers used as Component C are heterophasic propylene-ethylene copolymers and were prepared a two reactor continuous polymerisation reactor system. Each of the two reactors was a gas-phase, horizontal, cylindrical reactor. An inter-stage gas exchange system was located between the two reactors which was capable of capturing first reactor polymerisation product, being vented to remove first reactor gas, and then refilled with gas from the second reactor. This gas exchange system was present in order to preserve different gas compositions in each reactor stage. The first reactor was equipped with an off-gas port for recycling reactor gas through a condenser and back through a recycle line to nozzles in the reactor. In the first reactor, liquid propylene was used as a quench liquid to help control the temperature of the polymerisation. The reactor was operated in a continuous fashion. The second reactor was equipped with an off-gas port for recycling reactor gas but in this case no condenser was present. The second reactor was equipped with a constant temperature bath system which circulated water to heat transfer coils wrapped around the outside of the reactor, in order to maintain reactor temperature.

Polymerisation was initiated by the introduction to the first reactor of a high activity magnesium chloride supported titanium containing catalyst component produced in accordance with US 4886022. The titanium-containing catalyst component was introduced as a slurry (0.5-1.5 wt%) in hexane through a liquid propylene-flushed catalyst addition nozzle. A mixture of the organosilane modifier diisopropyldimethoxysilane (DIPDMS) and trialkylaluminum (TEA) co-catalyst in hexane was fed separately to the first reactor through a different liquid propylene-flushed addition nozzle with an Al/Si molar ratio of 6 and an Al/Mg molar ratio of 4. During polymerisation, active polymer powder was captured from the first reactor and exposed to a series of gas venting and re-pressurization steps, before being added to the second reactor. Hydrogen was fed to each reactor through a separate Brooks mass-flow meter on each reactor system in order to achieve the desired powder melt flow rate (MFR). Ethylene and propylene were fed separately to the second reactor through mass-flow meters in order to obtain a polymer with the desired ethylene content. The resulting polymer powder was pelletized in an extruder together with 750 ppm Irgafos 168, 370ppm Irganox 1010, 930 ppm Sodium benzoate and 2790 ppm glycerol monostearate for Component C1, and with 800 ppm Irgafos 168, 400 ppm Irganox 110, 250 ppm Hyperform^{®} HPN-20E, 400 ppm calcium stearate and 3600 ppm glycerol monostearate for Component C2.

The polymers had the following additional properties:

**TABLE 4**

| Component | | C1 | C2 |
|---|---|---|---|
| Matrix phase | | | |
| MFR | g/10min | 20 | 24 |
| Matrix content | wt% | 87.5 | 85.2 |

| Elastomeric propylene copolymer phase | | | |
|---|---|---|---|
| Copolymer content | wt% | 12.5 | 14.8 |
| Ethylene content in copolymer | wt% | 56 | 56 |

| Final composition | | | |
|---|---|---|---|
| MFR | g/10min | 6 | 25 |
| Ethylene content | wt% | 7 | 8.3 |
| XCS | wt% | 12.6 | 15.6 |
| Flexural modulus | MPa | 1500 | 1550 |
| Izod, notched, 23°C | kJ/m² | 10 | 7 |
| Izod, notched, -20°C | kJ/m² | 5.0 | 4.5 |
| Intrinsic viscosity XCS | dl/g | 0.30 | 0.22 |
| Intrinsic viscosity XCI | dl/g | 0.17 | 0.15 |
| Ratio IV(XCS)/IV(XCI) | | 1.76 | 1.47 |

Compositions comprising varying ratios of Components A-C above were formulated according to the relative amounts shown in Table 5 below. A comparative composition, Example C1, is also shown in which the PolyAl Component A2 of Example 2 is replaced by LDPE 1.

**TABLE 5**

| EXAMPLE | | C1 | 2 | 3 | 4 | 5 | 6 | 7 | 8 | 9 |
|---|---|---|---|---|---|---|---|---|---|---|
| Composition | | | | | | | | | | |
| Component A1 | wt% | - | - | - | - | - | 40 | - | - | - |
| Component A2 | wt% | - | 40 | 40 | 40 | 40 | - | 40 | - | 50 |
| Component A3 | wt% | - | - | - | - | - | - | - | 40 | - |
| LDPE 1 | wt% | 40 | - | - | - | - | - | - | - | - |
| Component B1 | wt% | 37.5 | 37.5 | | 30 | | 30 | 30 | 30 | 25 |
| Component B2 | wt% | - | - | 30 | - | 30 | - | - | - | - |
| Component C1 | wt% | 22.5 | 22.5 | - | - | 30 | 30 | 30 | 30 | 25 |
| Component C2 | wt% | - | - | 30 | 30 | - | - | - | - | - |
| Properties | | | | | | | | | | |
| MFR | g/10min | 9.7 | 5.2 | 11.7 | 7.7 | 8.7 | 6.7 | 6.2 | 5.9 | 6.2 |
| Tensile stress at yield | MPa | 25.9 | 27.6 | 24.6 | 25.8 | 25.8 | 25.2 | 25.4 | 26.5 | 24.7 |
| Tensile strain at yield | % | 10.6 | 9.7 | 10.0 | 10.0 | 10.0 | 11.9 | 10.6 | 9.4 | 11.4 |
| Flexural modulus | MPa | 1111 | 1337 | 1119 | 1201 | 1177 | 1105 | 1243 | 1422 | 1118 |
| Izod, notched, 23°C | kJ/m² | 7.4 | 4.3 | 4.0 | 4.5 | 4.2 | 5.5 | 5.2 | 4.1 | 5.4 |
| Izod, notched, -20°C | kJ/m² | 3.1 | 2.6 | 2.7 | 2.7 | 2.7 | 3.1 | 3.1 | 2.8 | 3.1 |

The blends of the invention in Examples 2-5 show that an acceptable balance of stiffness and impact resistance can be achieved despite the presence of PolyAl materials having high A1 contents. Example 2 in particular is directly comparable to Example C1, which differs only in that the LDPE component is a pure LDPE containing no PolyAl.

A comparison of Example 8 with Example 7 shows the effect of using a PolyAl having a significantly higher A1 content.

A comparison of Example 9 with Example 7 shows that the amount of the PolyAl component can be increased further without significantly affecting the stiffness and impact resistance.

## Claims

1. Composition comprising
A) 10-50wt% of a polyethylene having an MI₂ of 0.2-10 g/10min containing 0.5-18wt% aluminium;
B) 25-50wt% of a polypropylene homopolymer having an MFR (ISO 1133; 230°C; 2.16kg) of 3 - 45 g/10min and a xylene cold soluble (XCS) content of no more than 3wt%;
C) 10-30wt% of a heterophasic propylene copolymer containing 3 - 20wt% of ethylene and/or another C₄-C₈ α-olefin and having an MFR (ISO 1133; 230°C; 2.16kg) of 2 - 50 g/10min;
D) 0-10wt% of other additives, amounts being based on the total weight of the composition,
wherein the composition has an MFR of from 3 to 15 g/10min.

2. Composition according to claim 1, wherein the polyethylene of component A has an aluminium content of 2-12wt%, preferably 2-6 wt% and more preferably 2-4wt%.

3. Composition according to claim 1 or 2, wherein the propylene homopolymer of component B has a melt flow rate MFR (ISO 1133; 230°C; 2.16kg) of 4 - 35 g/10 min, preferably 5 - 25 g/10min.

4. Composition according to any preceding claim, wherein the propylene homopolymer of component B has an XCS content of no more than 2.5wt%, preferably no more than 2wt%.

5. Composition according to any preceding claim, wherein the propylene homopolymer of component B has a flexural modulus (ISO178) of at least 1900 MPa, preferably at least 2000 MPa and more preferably at least 2100 MPa.

6. Composition according to any preceding claim, wherein the heterophasic propylene copolymer of component C is a propylene-ethylene copolymer.

7. Composition according to any preceding claim, wherein the heterophasic propylene copolymer of component C has an MFR (MFR 230°C/2.16kg) of 10 to 40 g/10min, preferably 10 to 30 g/10min.

8. Composition according to any preceding claim, wherein the heterophasic propylene copolymer of component C has an XCS content in the range 6 - 40 wt%, preferably 8 - 30 wt% and more preferably 10-20wt%.

9. Composition according to any preceding claim, wherein the heterophasic propylene copolymer of component C comprises 65 - 94wt%, preferably 75 - 92wt% and more preferably 85-90wt% of a matrix comprising a propylene homopolymer, and 6 -35wt%, preferably 8 - 25wt% and more preferably 10 - 15wt% of an elastomeric polypropylene which is dispersed within the matrix and comprises comonomer units derived from ethylene and/or a C₄ to C₈ α-olefin.

10. Composition according to claim 9, wherein the elastomeric polypropylene contains 30 - 60wt%, preferably 40 - 60wt% and most preferably 50 - 60wt% of ethylene and/or a C₄ to C₈ α-olefin.

11. Composition according to claim 9 or 10, wherein the elastomeric polypropylene is a propylene-ethylene copolymer.

12. Article comprising a composition as defined in any preceding claim.

13. Article according to claim 12 which is a moulded article, preferably an injection moulded article.

## Patentansprüche

1. Zusammensetzung, umfassend
A) 10-50 Gew.-% eines Polyethylens, das einen MI₂ von 0,2-10 g/10 min aufweist und 0,5-18 Gew.-% Aluminium enthält;
B) 25-50 Gew.-% eines Polypropylen-Homopolymers, das eine MFR (ISO 1133; 230 °C; 2,16 kg) von 3-45 g/10 min und einen Gehalt an in kaltem Xylol löslicher Fraktion (XCS) von nicht mehr als 3 Gew.-% aufweist;
C) 10-30 Gew.-% eines heterophasischen Propylen-Copolymers, das 3-20 Gew.-% Ethylen und/oder ein anderes C₄-C₈-α-Olefin enthält und eine MFR (ISO 1133; 230 °C; 2,16 kg) von 2-50 g/10 min aufweist;
D) 0-10 Gew.-% anderer Additive, wobei die Mengen auf das Gesamtgewicht der Zusammensetzung bezogen sind,
wobei die Zusammensetzung eine MFR von 3 bis 15 g/10 min aufweist.

2. Zusammensetzung nach Anspruch 1, wobei das Polyethylen von Komponente A einen Aluminiumgehalt von 2-12 Gew.-%, vorzugsweise 2-6 Gew.-% und besonders bevorzugt 2-4 Gew.-% aufweist.

3. Zusammensetzung nach Anspruch 1 oder 2, wobei das Propylen-Homopolymer von Komponente B eine Schmelzflussrate MFR (ISO 1133; 230 °C; 2,16 kg) von 4-35 g/10 min, vorzugsweise 5-25 g/10 min aufweist.

4. Zusammensetzung nach einem der vorhergehenden Ansprüche, wobei das Propylen-Homopolymer von Komponente B einen XCS-Gehalt von nicht mehr als 2,5 Gew.-%, vorzugsweise nicht mehr als 2 Gew.-% aufweist.

5. Zusammensetzung nach einem der vorhergehenden Ansprüche, wobei das Propylen-Homopolymer von Komponente B einen Biegemodul (ISO 178) von mindestens 1900 MPa, vorzugsweise mindestens 2000 MPa und besonders bevorzugt mindestens 2100 MPa aufweist.

6. Zusammensetzung nach einem der vorhergehenden Ansprüche, wobei das heterophasische Propylen-Copolymer von Komponente C ein Propylen-Ethylen-Copolymer ist.

7. Zusammensetzung nach einem der vorhergehenden Ansprüche, wobei das heterophasische Propylen-Copolymer von Komponente C eine MFR (MFR 230 °C/2,16 kg) von 10 bis 40 g/10 min, vorzugsweise 10 bis 30 g/10 min aufweist.

8. Zusammensetzung nach einem der vorhergehenden Ansprüche, wobei das heterophasische Propylen-Copolymer von Komponente C einen XCS-Gehalt im Bereich von 6-40 Gew.-%, vorzugsweise 8-30 Gew.-% und besonders bevorzugt 10-20 Gew.-% aufweist.

9. Zusammensetzung nach einem der vorhergehenden Ansprüche, wobei das heterophasische Propylen-Copolymer von Komponente C 65-94 Gew.-%, vorzugsweise 75-92 Gew.-% und besonders bevorzugt 85-90 Gew.-% einer Matrix, die ein Propylen-Homopolymer umfasst, und 6-35 Gew.-%, vorzugsweise 8-25 Gew.-% und besonders bevorzugt 10-15 Gew.-% eines elastomeren Polypropylens umfasst, das innerhalb der Matrix dispergiert ist und Comonomereinheiten umfasst, die von Ethylen und/oder einem C₄- bis C₈-α-Olefin abgeleitet sind.

10. Zusammensetzung nach Anspruch 9, wobei das elastomere Polypropylen 30-60 Gew.-%, vorzugsweise 40-60 Gew.-% und am meisten bevorzugt 50-60 Gew.-% Ethylen und/oder ein C₄- bis C₈-α-Olefin enthält.

11. Zusammensetzung nach Anspruch 9 oder 10, wobei das elastomere Polypropylen ein Propylen-Ethylen-Copolymer ist.

12. Gegenstand, umfassend eine Zusammensetzung wie in einem der vorhergehenden Ansprüche definiert.

13. Gegenstand nach Anspruch 12, der ein Formgegenstand, vorzugsweise ein Spritzgussgegenstand ist.

## Revendications

1. Composition comprenant
A) 10 à 50 % en poids d'un polyéthylène ayant un MI₂ de 0,2 à 10 g/10 min contenant 0,5 à 18 % en poids d'aluminium ;
B) 25 à 50 % en poids d'un homopolymère de polypropylène ayant un MFR (ISO 1133 ; 230 °C ; 2,16 kg) de 3 à 45 g/10 min et une teneur en xylène soluble à froid (XCS) ne dépassant pas 3 % en poids ;
C) 10 à 30 % en poids d'un copolymère de propylène hétérophasique contenant 3 à 20 % en poids d'éthylène et/ou d'une autre α-oléfine C₄-C₈ et ayant un MFR (ISO 1133 ; 230 °C ; 2,16 kg) de 2 à 50 g/10 min ;
D) 0 à 10 % en poids d'autres additifs, les quantités étant basées sur le poids total de la composition,
dans laquelle la composition a un MFR de 3 à 15 g/10 min.

2. Composition selon la revendication 1, dans laquelle le polyéthylène du composant A a une teneur en aluminium de 2 à 12 % en poids, de préférence de 2 à 6 % en poids et de manière davantage préférée de 2 à 4 % en poids.

3. Composition selon la revendication 1 ou 2, dans laquelle l'homopolymère de propylène du composant B a un indice de fluidité à chaud MFR (ISO 1133 ; 230 °C ; 2,16 kg) de 4 à 35 g/10 min, de préférence de 5 à 25 g/10 min.

4. Composition selon une quelconque revendication précédente, dans laquelle l'homopolymère de propylène du composant B a une teneur en XCS d'au plus 2,5 % en poids, de préférence d'au plus 2 % en poids.

5. Composition selon une quelconque revendication précédente, dans laquelle l'homopolymère de propylène du composant B a un module de flexion (ISO178) d'au moins 1900 MPa, de préférence d'au moins 2000 MPa et de manière davantage préférée d'au moins 2100 MPa.

6. Composition selon une quelconque revendication précédente, dans laquelle le copolymère de propylène hétérophasique du composant C est un copolymère de propylène-éthylène.

7. Composition selon une quelconque revendication précédente, dans laquelle le copolymère de propylène hétérophasique du composant C a un MFR (MFR 20 °C/2,16 kg) de 10 à 40 g/10 min, de préférence de 10 à 30 g/10 min.

8. Composition selon une quelconque revendication précédente, dans laquelle le copolymère de propylène hétérophasique du composant C a une teneur en XCS comprise entre 6 et 40 % en poids, de préférence entre 8 et 30 % en poids et de manière davantage préférée entre 10 et 20 % en poids.

9. Composition selon une quelconque revendication précédente, dans laquelle le copolymère de propylène hétérophasique du composant C comprend 65 à 94 % en poids, de préférence 75 à 92 % en poids et de manière davantage préférée 85 à 90 % en poids d'une matrice comprenant un homopolymère de propylène, et 6 à 35 % en poids, de préférence 8 à 25 % en poids et de manière davantage préférée 10 à 15 % en poids d'un polypropylène élastomère dispersé dans la matrice et comprend des unités comonomères dérivées de l'éthylène et/ou d'une α-oléfine en C₄ à C₈.

10. Composition selon la revendication 9, dans laquelle le polypropylène élastomère contient 30 à 60 % en poids, de préférence 40 à 60 % en poids et de manière préférée entre toutes 50 à 60 % en poids d'éthylène et/ou d'une α-oléfine en C₄ à C₈.

11. Composition selon la revendication 9 ou 10, dans laquelle le polypropylène élastomère est un copolymère propylène-éthylène.

12. Article comprenant une composition telle que définie selon une quelconque revendication précédente.

13. Article selon la revendication 12, qui est un article moulé, de préférence un article moulé par injection.
